# EUROPÄISCHE PATENTSCHRIFT

(11) **EP 1 259 846 B1**
(45) Veröffentlichungstag und Bekanntmachung des Hinweises auf die Patenterteilung: **19.11.2003**
(21) Anmeldenummer: 01925290.7
(22) Anmeldetag: 21.02.2001
(51) Int. Cl.: H04N 5/232, G02B 7/28, G02B 7/32, G03B 13/36

(54) **VERFAHREN UND VORRICHTUNG ZUM JUSTIEREN EINER KAMERA**
METHOD AND DEVICE FOR ADJUSTING A CAMERA
PROCEDE ET DISPOSITIF DE REGLAGE D'UN APPAREIL PHOTOGRAPHIQUE

(30) Priorität: 29.02.2000 DE 10009571
(43) Veröffentlichungstag der Anmeldung: 27.11.2002
(73) Patentinhaber: Vision Components Gesellschaft für Bildverarbeitungssysteme MbH, 76275 Ettlingen (DE)
(72) Erfinder: ENGEL, Michael, 76185 Karlsruhe (DE)
(74) Vertreter: Jany, Peter, Dr.
(86) Internationale Anmeldenummer: DE0100701
(87) Internationale Veröffentlichungsnummer: WO01065837

(56) Entgegenhaltungen:
- US-A- 3 836 919
- US-A- 5 212 514
- US-A- 5 335 037
- US-A- 5 815 748
- US-A- 5 940 635

## Beschreibung

Die Erfindung bezieht sich auf ein Verfahren und eine Vorrichtung zum Justieren einer Kamera mit einem Bildsensor zum Aufnehmen eines Bildes und mit einem Objektiv zum Abbilden eines Objekts auf den Bildsensor.

Bei der Verwendung von Kameras, beispielsweise im Rahmen einer industriellen Fertigung zur Überwachung, Kontrolle und Steuerung von Fertigungsabläufen, ist es erforderlich, die Kamera zu justieren. Die Justage umfaßt dabei die Einstellung der Schärfe der optischen Abbildung durch geeignete Korrekturmaßnahmen, wie z.B. die Änderung der Bild- bzw. Gegenstandsweite der optischen Abbildung oder der Einstellung des Objektivs, sowie die Ausrichtung der Lage des Bildfelds, das dem gewünschten Sehfeld auf dem Objekt entsprechen soll und das durch die Position oder Ausrichtung des Bildsensors eingestellt wird. Diese Justagemaßnahmen sind unmittelbar vor Ort an der Kamera selbst durchzuführen.

Bei Kamerasystemen mit Bildsensoren steht für diesen Zweck oft ein Videosignal oder ein videoähnliches Signal zur Verfügung, mit dem es möglich ist, das von dem Bildsensor aufgenommene Bild auf einem lokal angeschlossenen Videomonitor zur Anzeige zu bringen und mittels dessen Darstellung die Schärfe und Lage des aufgenommenen Bildes zu kontrollieren. Dieses Verfahren hat jedoch den Nachteil, daß die Kamera mit einer aufwendigen Elektronik zum Erzeugen des am Ort zur Verfügung stehenden Videosignals ausgerüstet werden muß und die Justage der Kamera nur dann ausgeführt werden kann, wenn zu diesem Zweck ein Monitor bereitsteht und angeschlossen wird.

Eine andere bekannte Möglichkeit, die Schärfe und/oder das Bildfeld zu kontrollieren und einzustellen, auch wenn kein Videosignal oder Monitor zur Verfügung steht, besteht darin, die Kamera mit einer Autofokussiereinrichtung auszustatten, die automatisch die richtige Schärfe einstellt, so daß das manuelle Einstellen der Schärfe nicht erforderlich ist, sowie einen zusätzlichen Sucher in der Kamera vorzusehen, in dem das Bildfeld betrachtet werden kann. Diese Lösung hat den Nachteil, daß eine Auto-Fokussiereinrichtung in technischer Hinsicht aufwendig ist, zumal in vielen Anwendungsfällen die Entfernungseinstellung der Kamera nur selten, beispielsweise bei der Erstinstallation oder im Falle von Wartungs- oder Reparaturmaßnahmen, durchgeführt werden muß. Der dabei verwendete Sucher hat den Nachteil, daß das Bildfeld oft nicht hinreichend genau erkannt werden kann, insbesondere wenn die Gegenstandsweite variiert, und daß die jeweiligen Platzverhältnisse es nicht immer gestatten, mit dem menschlichen Auge durch den Sucher zu schauen.

Aus diesem Grund sind im Stand der Technik auch Projektionseinrichtungen bekannt, bei denen mittels einer Projektionseinrichtung eine Einstellmarke auf die Gegenstandsebene projiziert wird, mittels der die Schärfe der Abbildung und/oder das Bildfeld kontrolliert und eingestellt werden kann. Die Einstellmarken werden dabei durch einen geeigneten Schirm, z.B. ein einfaches Blatt weißes Papier, sichtbar gemacht.

Ein bekanntes Projektionssystem dieser Art verwendet zwei Projektionseinrichtungen, die unabhängig von dem Abbildungssystem für den Bildsensor sind und mittels derer jeweils ein Kreis auf die Objektebene projiziert wird. Die beiden Kreise haben einen identischen Durchmesser und die Projektion erfolgt unter einem leicht von der Parallelen abweichenden Winkel. Die Projektionseinrichtungen sind so justiert, daß bei einem korrekten Abstand des Bildsensor zum abzubildenden Objekt, d.h. bei optimaler Bildschärfe die beiden projizierten Kreise zu einem einzigen verschmelzen. Eine dritte Projektionseinrichtung ist vorgesehen, die einen weiteren dritten Kreis projiziert, der in etwa die Größe und die Lage des Sehfeldes, d.h. des Bereichs des Objekts, das auf das Bildfeld des Bildsensors abgebildet wird, angibt.

Derartige bekannte Systeme mit Projektionseinrichtungen sind in technischer Hinsicht aufwendig, da zusätzlich zu der eigentlichen Abbildungsoptik der Kamera mindestens eine weitere Abbildungsoptik für die Justageprojektionseinrichtungen erforderlich ist. Bei einer eventuellen Verstellung oder einem Wechsel der Optik ist es ferner erforderlich, die Projektionseinrichtung völlig neu zu justieren.

Aus dem Dokument EP 0080340 B1 ist ein optisches System bekannt, bei dem eine automatische Fokussierung durchgeführt wird. Hierzu wird Licht über das optische System auf das Objekt projziziert, durch das Objekt reflektiert und durch das optische System wieder empfangen und zum Scharfstellen auf einen Bildsensor abgebildet, der in der Bildebene des Objektivs angeordnet ist. Das Justieren und Einstellen unmittelbar vor Ort mit dem Auge kann dabei nicht durchgeführt werden, ohne daß zusätzliche technische Ausrüstung eingesetzt wird, um ein von dem Bildsensor aufgenommenes Bild zur Einstellung heranzuziehen. Aus dem Dokument DE-OS 2413155 ist eine vergleichbare Vorrichtung bekannt, die zwei Bildsensoren verwendet.

Aus dem Dokument US 4,899,188 ist eine Projektionseinrichtung zum Einstellen des Bildfelds bekannt, die nicht das Problem der Fokussierung einer Reproduktionseinrichtung löst.

Aus dem Dokument GB 2257800 A ist eine Einrichtung zur Bildfelderkennung bekannt. Dabei werden Laser eingesetzt, deren Licht nicht das Objektiv der Kamera passiert. Eine Kontrolle der Schärfe ist daher nicht möglich.

Der Erfindung liegt unter Berücksichtigung dieses Standes der Technik die Aufgabe zugrunde, ein Verfahren und eine Vorrichtung zum Justieren einer Kamera zu schaffen, die technisch weniger aufwendig ist und praktische Anwendungsvorteile bietet.

Diese Aufgabe wird erfindungsgemäß durch eine Vorrichtung mit den Merkmalen des beigefügten Anspruchs 1 und durch ein Verfahren mit den Merkmalen des beigefügten Anspruchs 17 bzw. 18 gelöst: Bevorzugte Ausgestaltungen und Weiterbildungen der Erfindungen ergeben sich aus den rückbezogenen Ansprüchen und der nachfolgenden Beschreibung mit zugehörigen Zeichnungen.

Eine erfindungsgemäße Kamera mit einem Bildsensor zum Aufnehmen eines Bildes und mit einem Objektiv zum Abbilden eines Objekts auf den Bildsensor weist also eine Vorrichtung zum Justieren der Entfernung der Kamera zu dem Objekt oder zum Einstellen des Objektivs auf, die einen teildurchlässigen Spiegel, der zwischen dem Objektiv und dem Bildsensor angeordnet ist, und mindestens eine Lichtquelle umfaßt. Ferner weist sie die Besonderheiten auf, daß der teildurchlässige Spiegel parallel zur lichtempfindlichen Fläche des Bildsensors orientiert ist, und daß die mindestens eine Lichtquelle zwischen dem Objektiv und dem teildurchlässigen Spiegel angeordnet ist und Licht in Richtung zu dem teildurchlässigen Spiegel emittiert. Dabei ist der Abstand der Lichtquelle zu dem Spiegel so groß wie der Abstand des Spiegels zu dem Bildsensor.

Bei einem erfindungsgemäßen Verfahren zum Justieren der Entfernung einer Kamera zu einem Objekt oder zum Einstellen des Objektivs der Kamera, wobei die Kamera einen Bildsensor zum Aufnehmen eines Bildes und ein Objektiv zum Abbilden eines Objekts auf den Bildsensor aufweist, wird die Kamera mit einem teildurchlässigen Spiegel ausgerüstet, der zwischen dem Objektiv und dem Bildsensor angeordnet wird, und es wird mindestens eine Lichtquelle vorgesehen. Der teildurchlässige Spiegel wird parallel zur lichtempfindlichen Fläche des Bildsensors orientiert, die mindestens eine Lichtquelle wird zwischen dem Objektiv und dem teildurchlässigen Spiegel angeordnet und emittiert Licht in Richtung zu dem teildurchlässigen Spiegel. Dabei ist der Abstand der Lichtquelle zu dem Spiegel so groß wie der Abstand des Spiegels zu dem Bildsensor und die Justage der Entfernung der Kamera zu dem Objekt bzw. die Einstellung des Objektivs wird anhand der Schärfe des Bildes der mindestens einen Lichtquelle in der Objektebene vorgenommen.

Bei einem erfindungsgemäßen Verfahren zum Einstellen der Position einer Kamera relativ zu einem Objekt, wobei die Kamera einen Bildsensor zum Aufnehmen eines Bildes und ein Objektiv zum Abbilden eines Objekts auf den Bildsensor aufweist, wird die Kamera mit einem teildurchlässigen Spiegel ausgerüstet, der zwischen dem Objektiv und dem Bildsensor angeordnet wird, und es wird mindestens eine Lichtquelle vorgesehen. Der teildurchlässige Spiegel wird parallel zur lichtempfindlichen Fläche des Bildsensors orientiert, und die mindestens eine Lichtquelle wird zwischen dem Objektiv und dem teildurchlässigen Spiegel angeordnet und emittiert Licht in Richtung zu dem teildurchlässigen Spiegel. Dabei ist der Abstand der Lichtquelle zu dem Spiegel so groß wie der Abstand des Spiegels zu dem Bildsensor, und die mindestens eine Lichtquelle wird derart relativ zu dem Bildsensor angeordnet, daß ihr Bild von dem teildurchlässigen Spiegel und dem Objektiv auf eine Stelle auf dem Objekt projiziert wird, die im Bereich des Randes des Sehfeldes des Bildsensors liegt. Die Position der Kamera zu dem Objekt wird dann anhand der Lage des Bildes der mindestens einen auf das Objekt projizierten Lichtquelle eingestellt.

Erfindungsgemäß wird mindestens eine Lichtquelle vorgesehen, die als Einstellhilfe dient, wobei das Bild der Lichtquelle als Schärfe- und/oder Bildfeldmarke auf das Objekt projiziert wird. Durch das Betrachten des Bildes der Einstellhilfe auf dem Objekt kann die Schärfe bzw. das Bildfeld eingestellt werden. Durch die Verwendung eines halbdurchlässigen Spiegels, der senkrecht zur optischen Achse orientiert wird, wird ein sehr kompakter Aufbau erzielt und der Justageaufwand ist gering.

Aus der Tatsache, daß das Abbildungsobjektiv bzw. der Strahlengang zum Abbilden des Objekts auf den Bildsensor sowohl für die eigentliche Erzeugung des Bildes des Objekts auf dem Bildsensor als auch zum Projizieren der mindestens einen Lichtquelle über den teildurchlässigen Spiegel in die Objektebene benutzt wird, ergeben sich vielfältige Vorteile. Die erfindungsgemäße Vorrichtung ist einfach aufzubauen, technisch unaufwendig, erfordert nur einen geringen Justageaufwand und ermöglicht die Verwendung austauschbarer Objektive und sogar Zoom-Objektive, was nach dem Stand der Technik bisher nicht möglich war. Die Justage kann durch Betrachten der auf das Objekt projizierten Lichtquelle in Bezug auf die Schärfe der Abbildung bzw. die Einstellung des Bildfeldes in einfacher Weise vor Ort erfolgen, ohne daß zusätzliche, technisch aufwendige Ausrüstungen erforderlich sind.

Mit der Erfindung werden somit Ziele erreicht, um die die Fachwelt sich schon lange bemüht hat. Um dabei besonders gute Ergebnisse hinsichtlich der praktischen Anwendung sowie hinsichtlich der konstruktiven Erfordernisse zu erzielen, werden bevorzugt die nachfolgenden Maßnahmen einzeln oder in Kombination miteinander eingesetzt.

Nach einem vorteilhaften zusätzlichen Merkmal kann vorgesehen sein, daß der Bildsensor und die Lichtquelle auf unterschiedlichen Seiten des halbdurchlässigen Spiegels angeordnet sind. Ein anderes bevorzugtes Merkmal kann darin bestehen, daß das Objektiv, die Lichtquelle, der teildurchlässige Spiegel und der Bildsensor geradlinig hintereinanderliegend angeordnet sind.

Ein vorteilhaftes Merkmal der Erfindung kann darin bestehen, daß die Justage oder Einstellung anhand einer Betrachtung des Bildes der mindestens einen durch das Objektiv projizierten Lichtquelle in der Objektebene mit dem Auge durchführbar ist. Es ist also keine zusätzliche technische Ausrüstung erforderlich, um ein Bild aufzunehmen, sondern das durch das Objektiv projizierte Bild der Lichtquelle ist unmittelbar durch einen Benutzer in der Objektebene betrachtbar und kann zum Justieren oder Einstellen dienen.

Nach einem bevorzugten zusätzlichen Merkmal wird vorgeschlagen, daß die mindestens eine Lichtquelle eine kleine Leuchtfläche aufweist. Je kleiner die Leuchtfläche ist, desto genauer läßt sich die Schärfe bzw. die Lage Ihres Bildpunktes auf dem Objekt erkennen. Eine möglichst geringe Ausdehnung der Lichtquelle, die im Idealfall quasi punktförmig ist, hat auch den Vorteil, daß es leichter ist, sie in dem jeweiligen Anwendungsfall derart anzuordnen, daß der Strahlengang nicht behindert wird. Desweiteren ist es vorteilhaft, wenn das von der Lichtquelle ausgestrahlte Licht möglichst hell ist, also die Lichtquelle eine hohe Leuchtdichte aufweist, da hierdurch die Erkennbarkeit des projizierten Abbilds der Lichtquelle verbessert wird.

In manchen Anwendungsfällen kann es auch vorteilhaft sein, wenn die Lichtquelle linienförmig emittierend ausgebildet ist. Mittels einer geradlinig oder bogenförmig ausgebildeten Lichtquelle kann in manchen Anwendungsfällen eine günstige Scharfstellung und/oder Anzeige des Randes des Sehfeldes erfolgen.

Im Rahmen der Erfindung vorteilhaft verwendbare Lichtquellen, insbesondere mit kleiner Leuchtfläche, sind Leuchtdioden, die in vielfältigen Ausführungen kommerziell zur Verfügung stehen. Als besonders vorteilhaft haben sich Lichtquellen erwiesen, die kein optisches Element, z.B. keine Linse aufweisen, da ein optisches Element der Lichtquelle den Strahlengang verändert und somit bei dem konstruktiven Aufbau dieser Einfluß berücksichtigt werden müßte. Besonders vorteilhaft sind in dieser Hinsicht rohe LED-Chips ohne Gehäuse oder LEDs, bei denen das Gehäuse eine flache Lichtaustrittsöffnung aufweist.

Zum Scharfstellen der optischen Abbildung ist prinzipiell eine Lichtquelle ausreichend. Dies gilt auch beim Einstellen der Lage des Bildfeldes, sofern ein geeigneter Referenzpunkt auf dem Objekt vorhanden ist. In anderen Fällen kann es jedoch vorteilhaft sein, zwei oder mehr Lichtquellen zu verwenden, um die Einstellung zusätzlicher Freiheitsgrade vorzunehmen. Wenn beispielsweise das Erfordernis besteht, den Bildsensor parallel zur Objektebene auszurichten, kann es vorteilhaft sein, mindestens drei Lichtquellen zu verwenden, die vorzugsweise nicht kollinear angeordnet sind, da die Lage einer Ebene durch drei Punkte definiert ist. In diesem Fall werden die Lichtquellen vorzugsweise in einer zur lichtempfindliche Fläche des Bildsensors parallelen Ebene angeordnet.

Ein bevorzugtes Merkmal, insbesondere zum Einstellen des Bildfeldes, ist darin zu sehen, daß die mindestens eine Lichtquelle derart relativ zu dem Bildsensor angeordnet ist, daß ihr Bild von dem teildurchlässigen Spiegel und dem Objektiv auf eine Stelle auf dem Objekt projiziert wird, die im Bereich des Randes des Sehfeldes des Bildsensors liegt. Auf diese Weise kann beim Betrachten des auf das Objekt projizierten Bildes der Lichtquelle der Rand des Bereichs des Objekts, der auf den Bildsensor abgebildet wird und somit das Bildfeld bzw. Sehfeld unmittelbar visualisiert werden. Je nach Ausführungsform der Kamera und den vorliegenden praktischen Gegebenheiten wird das Bildfeld durch eine außerhalb der Kamera befindliche Blende, die Apertur der Kamera oder die Ausdehnung des Bildsensors selbst vorgegeben.

Die Erfindung wird nachfolgend anhand eines in den Figuren dargestellten Ausführungsbeispiels näher erläutert. Die darin beschriebenen Besonderheiten können einzeln oder in Kombination miteinander eingesetzt werden, um bevorzugte Ausgestaltungen der Erfindung zu schaffen. Es zeigen:
- Fig. 1: ein Prinzipbild eines erfindungsgemäßen Strahlengangs und Aufbaus,
- Fig. 2: eine Anordnung von vier Lichtquellen auf einem Träger,
- Fig. 3: das projizierte Bild der Lichtquellen gemäß Fig. 2 auf dem Objekt,
- Fig. 4: einen abgewandelten Träger für die Lichtquellen,
- Fig. 5: den Träger gemäß Fig. 4 mit Lichtquellen und
- Fig. 6: einen Längsschnitt durch eine erfindungsgemäße Kamera.

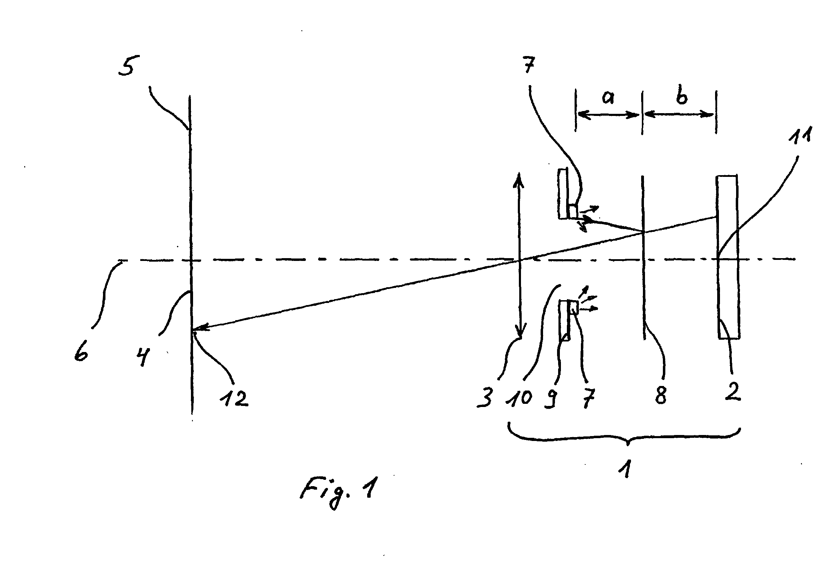

Die Fig. 1 veranschaulicht den Strahlengang und Aufbau gemäß der Erfindung. Er umfaßt eine Kamera 1 mit einem Bildsensor 2 und einem Objektiv 3 zum Abbilden eines Objekts 4 auf den Bildsensor 2. Das Objekt 4 ist in der Objektebene 5, bei der es sich während der Justage beispielsweise um ein weißes Blatt Papier handeln kann, angeordnet. Die optische Achse 6 ist ebenfalls in dem Strahlengang dargestellt.

Bei dem Bildsensor 2 handelt es sich beispielsweise um einen eindimensionalen (Zeilen-) oder zweidimensionalen (Matrix-) CCD-Sensor, einen CMOS-Sensor oder ein Photodioden-Array. Es kommen alle Arten von Bildsensoren, d.h. Halbleitersensoren, ausgebildet als CCD-Zeile oder CCD-Matrix, CMOS-Zeile oder CMOS-Matrix, Photodiodenzeilen oder -Arrays, Bildaufnahmeröhren, CID-Zeilen oder CID-Matrix, Vidicons, Newicons, Plumbicons usw. sowie ausgedehnte Einzeldetektoren, z.B. Photodioden, oder positionsempfindliche Detektoren, z.B. PSDs in Betracht. Beispielsweise kann ein CMOS-Sensor des Typs Hewlett Packard/Agilent HDSC 2000 verwendet werden.

Bei dem Objektiv 3 können beliebige Optiken eingesetzt werden, von einzelnen, einfachen, unkorrigierten Linsen bis zu komplexen, korrigierten Objektiven. Auch die Verwendung von Zoom-Objektiven ist möglich. Beispielsweise kann ein Objektiv des Typs Sekinos/Korea, SK12020S, 12 mm Brennweite verwendet werden.

Die Besonderheit in Fig. 1 besteht in den Lichtquellen 7 und dem teildurchlässigen Spiegel 8, die zum Justieren der Entfernung der Kamera 1 zu dem Objekt 4 bzw. der Objektebene 5 oder zum Einstellen des Objektivs 3 oder zum Ausrichten der Position der Kamera zu dem Objekt 4 zum Einstellen des Bildfelds dienen.

Der teildurchlässige Spiegel 8 ist zwischen dem Objektiv 3 und dem Bildsensor 2 angeordnet und parallel zur lichtempfindlichen Fläche des Bildsensors 2 orientiert. Der Grad der Teilverspiegelung kann den praktischen Erfordernissen angepaßt werden und beispielsweise zwischen 1% und 99% liegen; in der Praxis haben sich Werte um 50% bewährt. Beispielsweise kann ein teildurchlässiger Spiegel des Typs Melles Griot 03BTF007 verwendet werden. Der teildurchlässige Spiegel kann je nach Anforderung auch als Filter, z.B. IR-Sperr-, IR-Durchlaß-, Farb- oder Polarisationsfilter dienen, beispielsweise mittels einer zusätzlichen Beschichtung und/oder durch die Wahl eines entsprechenden Glases bzw. Kunststoffs.

Bei den Lichtquellen 7 handelt es sich um LEDs, beispielsweise des Typs Kingbright, Rheinmetall-Elektronik KP-1608SRC/Waterclear, 660 nm aus GaAlAs, die eine Breite von 0,8 mm, eine Länge von 1,6 mm und eine Höhe von 1,1 mm aufweisen. Die Lichtquellen 7 sind zwischen dem Objektiv 3 und dem teildurchlässigen Spiegel 8 angeordnet und emittieren Licht in Richtung zu dem teildurchlässigen Spiegel 8. Sie befinden sich auf einem Träger 9, beispielsweise einer Leiterplatte, der eine Öffnung 10 für den optischen Strahlengang aufweist.

Der Abstand a der Lichtquellen 7 zu dem teildurchlässigen Spiegel 8 ist möglichst genau so groß wie der Abstand b des Spiegels 8 zu dem Bildsensor 2. Sofern die jeweiligen Elemente in Richtung der optischen Achse 6 ausgedehnt sind, beziehen sich die vorstehenden Abstandsangaben bei dem Bildsensor 2 auf die lichtempfindliche Fläche, bei dem halbdurchlässigen Spiegel 8 auf die verspiegelte Fläche und bei den Lichtquellen 7 auf die lichtemittierende Stelle.

Durch diese spezielle Anordnung wird erreicht, daß das von den Lichtquellen 7 ausgehende Licht von dem teildurchlässigen Spiegel 8 reflektiert und durch die Öffnung 10 des Trägers 9 in das Objektiv 3 und dort auf die Objektebene 5 projiziert wird, wobei die Objektebene 5 für die Abbildung des Objekts 4 auf den Bildsensor 2 gleichzeitig auch die Bildebene für die Abbildung der Lichtquellen 7 auf die Objektebene 5 ist. Dadurch ergibt sich, daß das von Lichtquellen 7 auf die Objektebene 5 projizierte Licht genau dann scharf ist, wenn auch das von dem Bildsensor 2 aufgenommene Bild des Objekts 4 scharf ist. Es kann daher mit einem Schirm, zum Beispiel einem weißen Blatt Papier, die Schärfe der Abbildung kontrolliert und erforderlichenfalls der Abstand der Kamera 1 zu dem Objekt 4 oder das Objektiv 3 eingestellt werden. In demjenigen Abstand der Kamera 1 zu dem Objekt 4 bzw. bei derjenigen Einstellung des Objektivs 3, bei der die Lichtquellen 7 am schärfsten auf die Objektebene 5 abgebildet werden, ist auch die Abbildung des Objekts 4 auf den Bildsensor 2 am schärfsten.

Das Objektiv 3 dient somit einerseits zum Abbilden des Objekts 4 auf den Bildsensor 2 und andererseits zum Abbilden des von den Lichtquellen 7 emittierten und vom teildurchlässigen Spiegel 8 reflektierten Lichts auf die Objektebene 5. Der virtuelle Abstand der Lichtquellen 7 zum Objektiv 3 ist gleich dem Abstand des Bildsensors 2 zum Objektiv, so daß die projizierten Lichtquellen 7 immer die Schärfe für die jeweilige Entfernungseinstellung des Objektivs anzeigen, sogar unabhängig von der Brennweite des Objektivs 3. Der Aufbau ist aufgrund der parallelen Anordnung des teildurchlässigen Spiegels 8 parallel zum Bildsensor 2 kompakt, kostengünstig und gut zu justieren.

Ein vorteilhaftes Merkmal kann darin bestehen, daß die Lichtquellen 7 in Richtung zum Schnittpunkt 11 der optischen Achse 6 der Kamera 1 mit dem Bildsensor 2 emittierend angeordnet sind. Hierdurch kann die Helligkeit des auf die Objektebene 5 projizierten Lichts erhöht werden, wenn die Lichtquellen 7 eine anisotrope Emissionscharakteristik aufweisen.

Wenn die dargestellte Vorrichtung auch zum Einstellen des Bildfeldes des Bildsensors 2 dienen soll, werden die Lichtquellen 7 vorzugsweise derart relativ zu dem Bildsensor 2 angeordnet, daß ihr Bild von dem teildurchlässigen Spiegel 8 und dem Objektiv 3 auf eine Stelle in der Objektebene 5 bzw. dem Objekt 4 projiziert wird, die im Bereich des Randes des Sehfeldes des Bildsensors 2 liegt. Auf diese Weise können die Lichtquellen 7 derart angeordnet sein, daß ihre Bilder in der Objektebene 5 entlang des Umrisses des abzubildenden Objektes 4 liegen, d.h. das Bildfeld der projizierten Lichtquellen 7 entspricht dem Sehfeld des Bildsensors 2, so daß durch Betrachten der Lage der Bildpunkte der Lichtquellen 7 in der Objektebene 5, d.h. auf einem Objekt 4 oder auf einem Schirm das Sehfeld des Bildsensors 2 unmittelbar zu erkennen ist.

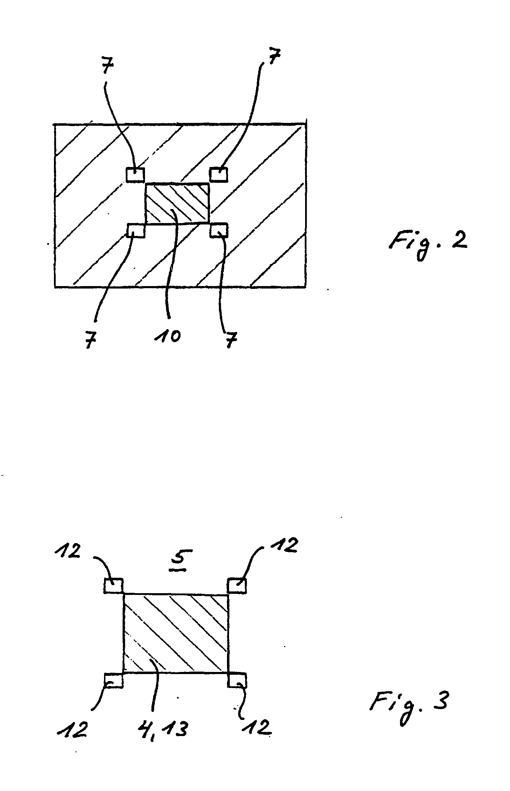

Dies ist in den Figuren 2 und 3 veranschaulicht. Die Fig. 2 zeigt eine Ansicht eines Trägers 9, beispielsweise einer Leiterplatte. Diese weist eine Öffnung 10 für den optischen Strahlengang auf, und die Lichtquellen 7 sind unmittelbar an der Kante bzw. den Rand dieser Öffnung 10 angeordnet. Vorzugsweise sind die Lichtquellen 7 so angeordnet, daß ihre Lage dem abzubildenden Bildausschnitt entspricht, also in dem dargestellten Beispiel in den Ekken des Rechtecks der Öffnung 10, die das Bildfeld begrenzt.

In Fig. 3 ist das, ggf. vergrößerte, Abbild der Lichtquellen 7 in der Objektebene 5 dargestellt. Das der Öffnung 10 entsprechende Gebiet auf dem Objekt 4, das auf den Bildsensor 2 abgebildet wird, also das Sehfeld 13 des Bildsensors 2 darstellt, ist durch ein schraffiertes Rechteck angedeutet. In der Praxis ist dieses Rechteck natürlich nicht zu sehen, aber seine Lage kann anhand des Ortes des Abbilds 12 der Lichtquellen 7 erkannt werden. Auf diese Weise ist es möglich, durch Verschieben der Kamera 1 diese so auszurichten, daß der gewünschte Bereich des Objekts 4 auf den Bildsensor 2 abgebildet wird.

Es ist klar, daß auch eine größere oder geringere Anzahl von Lichtquellen 7 verwendet werden kann, die in anderer Anordnung, z.B. entlang der Kanten des Sehfelds 13 angeordnet werden, oder linienhaft emittierende Lichtquellen 7 verwendet werden können. Bei einem rechteckigen Sehfeld 13 eines Bildsensors 2 ist es bevorzugt, wenn vier Lichtquellen 7 vorgesehen sind, deren Bilder in der Objektebene 5 in den Eckpunkten des Sehfeldes 13 liegen.

Wenn beispielsweise die lichtempfindliche Fläche des Bildsensors 2 ein Rechteck von 4,8 mm x 3,6 mm ist und in der Objektebene 5 die Lage der auf dieses Rechteck abgebildeten Objektpunkte angezeigt werden soll, würde man vorzugsweise 4 Leuchtdioden auf dem Träger 9 so anordnen, daß ihre lichtemittierenden Elemente möglichst genau auf den Ecken eines Rechtecks von 4,8 mm x 3,6 mm liegen. Die Öffnung 10 auf dem Träger 9 für den optischen Strahlengang ist nur geringfügig kleiner als das Rechteck von 4,8 mm x 3,6 mm, abhängig von den gewählten Abständen der einzelnen Lichtquellen und der Brennweite des verwendeten Objektivs 3.

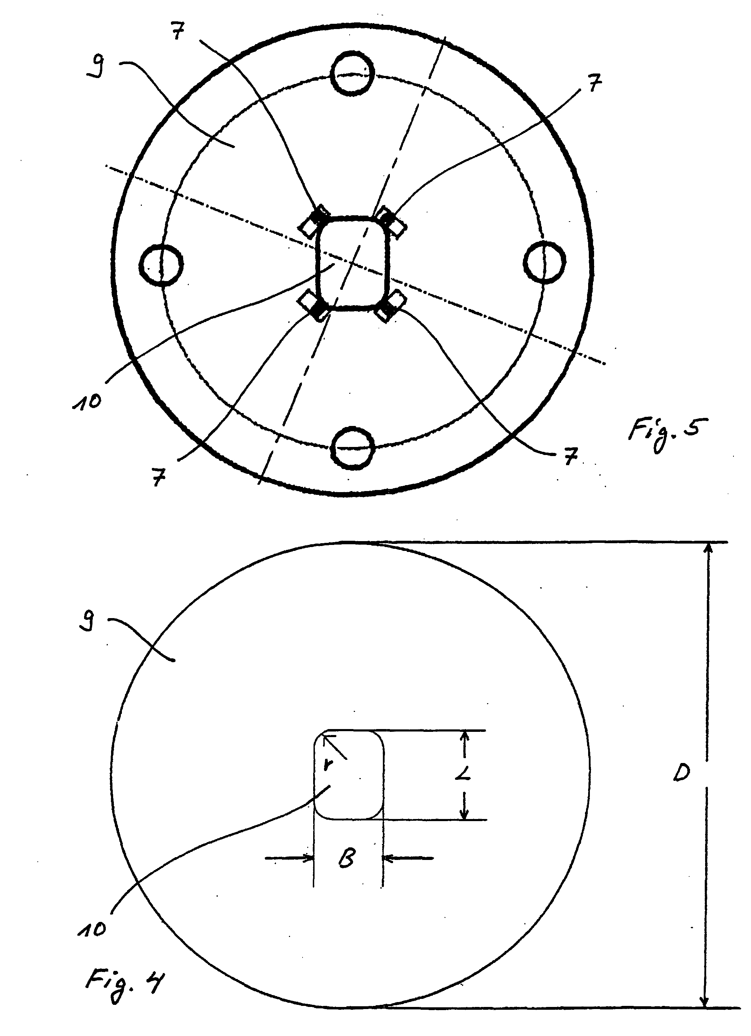

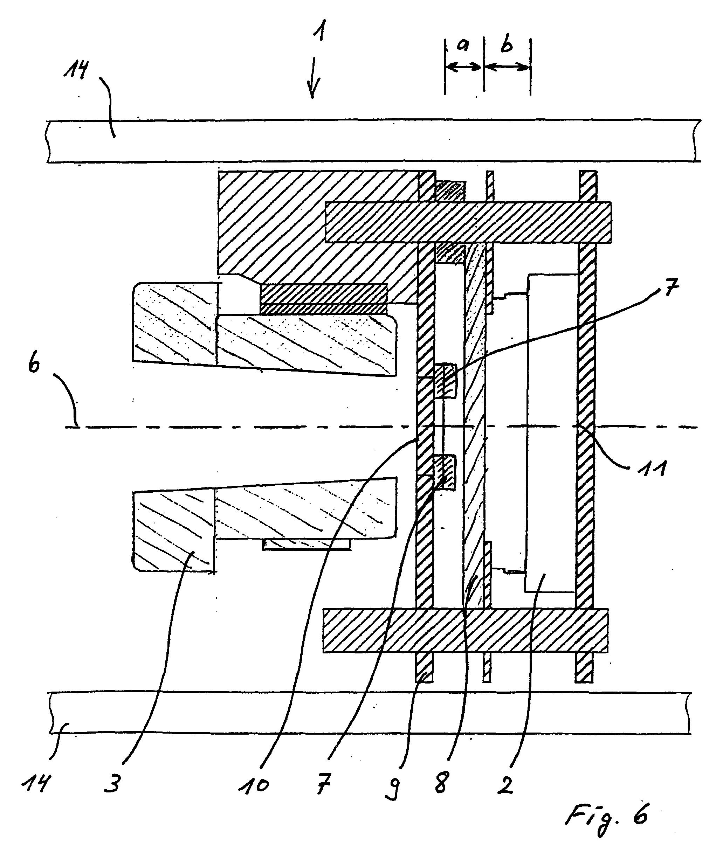

Die Fig. 4 zeigt eine schematische Aufsicht eines vorbereiteten Trägers 9 mit Öffnung 10, und in Fig. 5 ist der Träger gemäß Fig. 4 mit montierten Lichtquellen 7 und Montagebohrungen zum Einbau in ein rohrförmiges Gehäuse einer Kamera dargestellt. Die Länge L der Öffnung 10 beträgt ca. 4,8 mm, die Breite B ca. 3,6 mm und der Durchmesser D des Trägers 9 ca. 25 mm. Um die Abschattung des Lichtes möglichst gering zu halten, sind die Lichtquellen 7 in Fig. 5 mit einem Winkel von 45° zu den Längs- und Querkanten der Öffnung 10 angeordnet. Dies ermöglicht es, die Öffnung 10 in dem Träger 9 an den Ecken mit einem Krümmungsradius r zu versehen, der fertigungstechnisch notwendig sein kann. Es kann auch ein gewisser "Überhang" der Leuchtdioden vorgesehen sein, wobei die Anschlüsse der Leuchtdioden auf dem Träger, die sogenannten Pads und Lands vollständig ausgeprägt sind, nicht aber der Zwischenraum zwischen den Pads. Durch derartige Maßnahmen ist es möglich, die Lichtquellen möglichst nahe in den Ecken des Sehfeldes anzubringen und somit ein möglichst genaues Abbild des Sehfeldes in die Objektebene 5 zu projizieren.

Die Fig. 6 zeigt einen Längsschnitt durch einen Abschnitt einer Kamera 1 mit einer erfindungsgemäßen Vorrichtung. Sie umfaßt ein rohrförmiges Gehäuse 14, in das der Träger 9 gemäß Fig. 5 eingesetzt ist. Der Abstand a der Lichtquellen 7 zur Verspiegelung des teildurchlässigen Spiegels 8 sollte möglichst genau dem Abstand b der Verspiegelung des teildurchlässigen Spiegels 8 von der lichtempfindlichen Fläche des Bildsensors 2 entsprechen. Dies kann durch geeignete konstruktive Maßnahmen oder durch Justagelemente gewährleistet werden. Beispielsweise können gestanzte, in der Dicke variable Beilagscheiben aus Kunststoff mit unterschiedlicher Dicke vorgesehen sein, die zum Einstellen eines korrekten Abstands auch kombiniert werden können.

### Bezugszeichenliste

- 1: Kamera
- 2: Bildsensor
- 3: Objektiv
- 4: Objekt
- 5: Objektebene
- 6: optische Achse
- 7: Lichtquelle
- 8: teildurchlässiger Spiegel
- 9: Träger
- 10: Öffnung
- 11: Schnittpunkt 2-6
- 12: Abbild zu 7
- 13: Sehfeld
- 14: Gehäuse
- a: Abstand 7-8
- b: Abstand 8-2
- L: Länge
- B: Breite
- D: Durchmesser
- r: Krümmungsradius

## Patentansprüche

1. Kamera (1) mit einem Bildsensor (2) zum Aufnehmen eines Bildes, mit einem Objektiv (3) zum Abbilden eines Objekts (4) auf den Bildsensor (2) und mit einer Vorrichtung zum Justieren der Entfernung der Kamera (1) zu dem Objekt (4) oder zum Einstellen des Objektivs (3) ,
die einen teildurchlässigen Spiegel (8), der zwischen dem Objektiv (3) und dem Bildsensor ( 2) angeordnet ist,
und mindestens eine Lichtquelle (7) umfaßt,
**dadurch gekennzeichnet, daß**
der teildurchlässige Spiegel (8) parallel zur lichtempfindlichen Fläche des Bildsensors (2) orientiert ist,
die mindestens eine Lichtquelle (7) zwischen dem Objektiv (3) und dem teildurchlässigen Spiegel (8) angeordnet ist und Licht in Richtung zu dem teildurchlässigen Spiegel (8) emittiert, und
der Abstand (a) der Lichtquelle (7) zu dem Spiegel (8) so groß ist wie der Abstand (b) des Spiegels (8) zu dem Bildsensor (2).

2. Kamera nach Anspruch 1, **dadurch gekennzeichnet, daß** der Bildsensor (2) und die Lichtquelle (7) auf unterschiedlichen Seiten des teildurchlässigen Spiegels (8) angeordnet sind.

3. Kamera nach Anspruch 1 oder 2, **dadurch gekennzeichnet, daß** das Objektiv (3), die Lichtquelle (7), der teildurchlässige Spiegel (8) und der Bildsensor (2) geradlinig hintereinanderliegend angeordnet sind.

4. Kamera nach einem der vorhergehenden Ansprüche, **dadurch gekennzeichnet, daß** die Justage oder Einstellung anhand einer Betrachtung des Bildes der mindestens einen durch das Objektiv (3) projizierten Lichtquelle (7) in der Objektebene (5) mit dem Auge durchführbar ist.

5. Kamera (1) nach einem der Ansprüche 1 bis 4, **dadurch gekennzeichnet, daß** die mindestens eine Lichtquelle (7) eine kleine Leuchtfläche aufweist.

6. Kamera (1) nach einem der Ansprüche 1 bis 4, **dadurch gekennzeichnet, daß** die mindestens eine Lichtquelle (7) linienförmig emittierend ausgebildet ist.

7. Kamera (1) nach einem der vorhergehenden Ansprüche, **dadurch gekennzeichnet, daß** die mindestens eine Lichtquelle (7) eine Leuchtdiode ist.

8. Kamera (1) nach einem der vorhergehenden Ansprüche, **dadurch gekennzeichnet, daß** die mindestens eine Lichtquelle (7) kein optisches Element, z.B. keine Linse aufweist.

9. Kamera (1) nach einem der vorhergehenden Ansprüche, **dadurch gekennzeichnet, daß** sie mindestens drei Lichtquellen (7) umfaßt.

10. Kamera (1) nach Anspruch 9, **dadurch gekennzeichnet, daß** die Lichtquellen (7) in einer zur lichtempfindlichen Fläche des Bildsensors (2) parallelen Ebene angeordnet sind.

11. Kamera (1) nach einem der vorhergehenden Ansprüche, **dadurch gekennzeichnet, daß** die mindestens eine Lichtquelle (7) derart relativ zu dem Bildsensor (2) angeordnet ist, daß ihr Bild von dem teildurchlässigen Spiegel (8) und dem Objektiv (3) auf eine Stelle auf dem Objekt (4) projiziert wird, die im Bereich des Randes des Sehfeldes (13) des Bildsensors (2) liegt.

12. Kamera (1) nach Anspruch 11, **dadurch gekennzeichnet, daß** sie mehrere Lichtquellen (7) umfaßt, die derart angeordnet sind, daß ihre Bilder in der Objektebene (5) entlang des Umrisses des abzubildenden Objektes (4) liegen.

13. Kamera (1) nach Anspruch 12, **dadurch gekennzeichnet, daß** sie vier Lichtquellen (7) umfaßt, deren Bilder in der Objektebene (5) in den Eckpunkten eines rechteckigen Sehfeldes (13) des Bildsensors (2) liegen.

14. Kamera (1) nach einem der vorhergehenden Ansprüche, **dadurch gekennzeichnet, daß** die mindestens eine Lichtquelle (7) in Richtung zum Schnittpunkt (11) der optischen Achse (6) der Kamera (1) mit dem Bildsensor (2) emittierend angeordnet ist.

15. Kamera (1) nach einem der vorhergehenden Ansprüche, **dadurch gekennzeichnet, daß** die mindestens eine Lichtquelle (7) auf einem Träger (9) angeordnet ist, der eine Öffnung (10) für den optischen Strahlengang aufweist, wobei die mindestens eine Lichtquelle (7) im Bereich der Kante der Öffnung (10) angebracht ist.

16. Kamera (1) nach einem der vorhergehenden Ansprüche, **dadurch gekennzeichnet, daß** das Objektiv (3) ein Zoomobjektiv ist.

17. Verfahren zum Justieren der Entfernung einer Kamera (1) zu einem Objekt (4) oder zum Einstellen des Objektivs (3) der Kamera (1), wobei die Kamera (1) einen Bildsensor (2) zum Aufnehmen eines Bildes und ein Objektiv (3) zum Abbilden eines Objekts (4) auf den Bildsensor (2) aufweist,
wobei die Kamera (1) mit einem teildurchlässigen Spiegel (8) ausgerüstet wird, der zwischen dem Objektiv (3) und dem Bildsensor (2) angeordnet wird, und mindestens eine Lichtquelle (7) vorgesehen wird,
**dadurch gekennzeichnet, daß**
der teildurchlässige Spiegel (8) parallel zur lichtempfindlichen Fläche des Bildsensors (2) orientiert wird,
die mindestens eine Lichtquelle (7) zwischen dem Objektiv (3) und dem teildurchlässigen Spiegel (8) angeordnet wird und Licht in Richtung zu dem teildurchlässigen Spiegel (8) emittiert,
wobei der Abstand (a) der Lichtquelle (7) zu dem Spiegel (8) so groß ist wie der Abstand (b) des Spiegels (8) zu dem Bildsensor (2),
und die Justage der Entfernung der Kamera (1) zu dem Objekt (4) bzw. die Einstellung des Objektivs (3) anhand der Schärfe des Bildes der mindestens einen Lichtquelle (7) in der Objektebene (5) vorgenommen wird.

18. Verfahren zum Einstellen der Position einer Kamera (1) relativ zu einem Objekt (4), wobei die Kamera (1) einen Bildsensor (2) zum Aufnehmen eines Bildes und ein Objektiv (3) zum Abbilden eines Objekts (4) auf den Bildsensor (2) aufweist,
wobei die Kamera (1) mit einem teildurchlässigen Spiegel (8) ausgerüstet wird, der zwischen dem Objektiv (3) und dem Bildsensor (2) angeordnet wird, und mindestens eine Lichtquelle (7) vorgesehen wird,
**dadurch gekennzeichnet, daß**
der teildurchlässige Spiegel (8) parallel zur lichtempfindlichen Fläche des Bildsensors (2) orientiert wird,
die mindestens eine Lichtquelle (7) zwischen dem Objektiv (3) und dem teildurchlässigen Spiegel (8) angeordnet wird und Licht in Richtung zu dem teildurchlässigen Spiegel (8) emittiert,
wobei der Abstand (a) der Lichtquelle (7) zu dem Spiegel (8) so groß wie der Abstand (b) des Spiegels (8) zu dem Bildsensor (2) ist,
und die mindestens eine Lichtquelle (7) derart relativ zu dem Bildsensor (2) angeordnet wird, daß ihr Bild von dem teildurchlässigen Spiegel (8) und dem Objektiv (3) auf eine Stelle auf dem Objekt (4) projiziert wird, die im Bereich des Randes des Sehfeldes (13) des Bildsensors (2) liegt,
und die Position der Kamera (1) zu dem Objekt (4) anhand der Lage des Bildes der mindestens einen auf das Objekt (4) projizierten Lichtquelle (7) eingestellt wird.

19. Verfahren nach Anspruch 18, **dadurch gekennzeichnet, daß** mehrere Lichtquellen (7) verwendet werden, die derart angeordnet werden, daß ihre Bilder in der Objektebene (5) entlang des Umrisses des abzubildenden Objektes (4) liegen.

20. Verfahren nach Anspruch 19, **dadurch gekennzeichnet, daß** vier Lichtquellen (7) verwendet werden, deren Bilder in der Objektebene (5) in den Eckpunkten eines rechteckigen Sehfeldes (13) des Bildsensors (2) liegen.

21. Verfahren nach einem der Ansprüche 17 bis 20, **dadurch gekennzeichnet, daß** der Bildsensor (2) und die Lichtquelle (7) auf unterschiedlichen Seiten des teildurchlässigen Spiegels (8) angeordnet werden.

22. Verfahren nach einem der Ansprüche 17 bis 21, **dadurch gekennzeichnet, daß** das Objektiv (3), die Lichtquelle (7), der teildurchlässige Spiegel (8) und der Bildsensor (2) geradlinig hintereinanderliegend angeordnet werden.

23. Verfahren nach einem der Ansprüche 17 bis 22, **dadurch gekennzeichnet, daß** die Justage oder Einstellung anhand einer Betrachtung des Bildes der mindestens einen durch das Objektiv (3) projizierten Lichtquelle (7) in der Objektebene (5) mit dem Auge durchgeführt wird.

## Claims

1. A camera (1) having an image sensor (2) for taking an image, having a lens (3) for imaging an object (4) onto the image sensor (2) and having an apparatus for adjusting the distance from the camera (1) to the object (4), or for adjusting the lens (3),
comprising a partially transmitting mirror (8) arranged between the lens (3) and the image sensor (2) ,
and at least one light source (7),
**characterised in that**
the partially transmitting mirror (8) is oriented parallel to the light sensitive surface of the image sensor (2),
said at least one light source (7) is disposed between the lens (3) and the partially transmitting mirror (8) and emits light towards the partially transmitting mirror (8), and
the distance (a) from the light source (7) to the mirror (8) is as long as the distance (b) from the mirror (8) to the image sensor (2).

2. The camera according to claim 1, **characterised in that** the image sensor (2) and light source (7) are arranged on different sides of the partially transmitting mirror (8).

3. The camera according to claim 1 or claim 2, **characterised in that** the lens (3), the light source (7), the partially transmitting mirror (8), and the image sensor (2) are arranged in a straight line one behind the other.

4. The camera according to any one of the preceding claims, **characterised in that** the adjusting or setting may be carried out based on a viewing of the image of said at least one light source (7) projected by said lens (3) in the object plane (5) by the human eye.

5. The camera (1) according to any one of claims 1 to 4, **characterised in that** said at least one light source (7) has a small luminous area.

6. The camera (1) according to any one of claims 1 to 4, **characterised in that** said at least one light source (7) is configured to emit in a line.

7. The camera (1) according to any one of the preceding claims, **characterised in that** said at least one light source (7) is a light emitting diode.

8. The camera (1) according to any one of the preceding claims, **characterised in that** said at least one light source (7) does not have an optical element, such as a lens.

9. The camera (1) according to any one of the preceding claims, **characterised in that** it comprises at least three light sources (7).

10. The camera (1) according claim 9, **characterised in that** said light sources (7) are arranged in a plane parallel to the light sensitive surface of the image sensor (2).

11. The camera (1) according to any one of the preceding claims, **characterised in that** said at least one light source (7) is arranged relative to the image sensor (2) in such a way that its image is projected by the partially transmitting mirror (8) and the lens (3) onto a point on the object (4) which is in the marginal area of the viewing field (13) of the image sensor (2).

12. The camera (1) according to claim 11, **characterised in that** it comprises a plurality of light sources (7) arranged in such a way that their images are situated in the object plane (5) along the contour of the object (4) to be imaged.

13. The camera (1) according to claim 12, **characterised in that** it comprises four light sources (7) whose images lie in the object plane (5) in the corner points of a rectangular viewing field (13) of the image sensor (2).

14. The camera (1) according to any one of the preceding claims, **characterised in that** said at least one light source (7) is arranged to emit towards the intersection point (11) of the optical axis (6) of the camera (1) and the image sensor (2).

15. The camera (1) according to any one of the preceding claims, **characterised in that** said at least one light source (7) is arranged on a carrier (9) having an opening (10) for the optical beam path, wherein said at least one light source (7) is mounted in the area of the edge of the opening (10).

16. The camera (1) according to any one of the preceding claims, **characterised in that** the lens (3) is a zoom lens.

17. A method for adjusting the distance from a camera (1) to an object (4), or for adjusting the lens (3) of the camera (1), wherein the camera (1) has an image sensor (2) for taking an image and a lens (3) for imaging an object (4) onto the image sensor (2),
wherein the camera (1) is equipped with a partially transmitting mirror (8) arranged between the lens (3) and the image sensor (2),
and at least one light source (7) is provided,
**characterised in that**
the partially transmitting mirror (8) is oriented parallel to the light sensitive surface of the image sensor (2),
said at least one light source (7) is arranged between the lens (3) and the partially transmitting mirror (8) and emits light towards the partially transmitting mirror (8),
wherein the distance (a) from the light source (7) to the mirror (8) is as long as the distance (b) from the mirror (8) to the image sensor (2),
and the adjustment of the distance from the camera (1) to the object (4) or the adjustment of the lens (3) is carried out based on the focus of the image of said at least one light source (7) in the object plane (5).

18. A method for adjusting the position of a camera (1) relative to an object (4) wherein the camera (1) has an image sensor (2) for taking an image and a lens (3) for imaging the object (4) onto the image sensor (2),
wherein the camera (1) is equipped with a partially transmitting mirror (8) arranged between the lens (3) and the image sensor (2),
and at least one light source (7) is provided,
**characterised in that**
the partially transmitting mirror (8) is oriented parallel to the light sensitive surface of the image sensor (2),
said at least one light source (7) is arranged between the lens (3) and the partially transmitting mirror (8) and emits light towards the partially transmitting mirror (8),
wherein the distance (a) from the light source (7) to the mirror (8) is as long as the distance (b) from the mirror (8) to the image sensor (2),
and said at least one light source (7) is arranged relative to the image sensor (2) in such a way that its image is projected by the partially transmitting mirror (8) and the lens (3) onto a position on the object (4) which is in the marginal area of the viewing field (13) of the image sensor (2),
and the position of the camera (1) with respect to the object (4) is adjusted based on the position of the image of said at least one light source (7) projected onto the object (4).

19. The method according to claim 18, **characterised in that** a plurality of light sources (7) are used arranged in such a way that their images in the object plane (5) lie along the contour of the object to be imaged.

20. The method according to claim 19, **characterised in that** four light sources (7) are used whose images lie in the object plane (5) in the corner points of a rectangular viewing field (13) of the image sensor (2).

21. The method according to any one of claims 17 to 20, **characterised in that** the image sensor (2) and light source (7) are arranged on different sides of the partially transmitting mirror (8).

22. The method according to any one of claims 17 to 21, **characterised in that** the lens (3), the light source (7), the partially transmitting mirror (8), and the image sensor (2) are arranged in a straight line one behind the other.

23. The method according to any one of claims 17 to 22, **characterised in that** the adjusting or setting may be carried out based on a viewing by the human eye of the image of said at least one light source (7) projected by said lens (3) in the object plane (5).

## Revendications

1. Appareil photographique (1) comprenant un capteur d'image (2) pour enregistrer une image, un objectif (3) pour reproduire un objet (4) sur le capteur d'image (2) et un dispositif pour ajuster l'éloignement de l'appareil photographique (1) par rapport à l'objet (4) ou pour régler l'objectif (3),
qui comprend un miroir semi-transparent (8), qui est disposé entre l'objectif (3) et le capteur d'image (2),
et au moins une source de lumière (7),
**caractérisé en ce que**
le miroir semi-transparent (8) est orienté parallèlement à la surface photosensible du capteur d'image (2),
la au moins une source de lumière (7) est disposée entre l'objectif (3) et le miroir semi-transparent (8) et émet de la lumière en direction du miroir semi-transparent (8), et
la distance (a) de la source de lumière (7) au miroir semi-transparent (8) est égale à la distance (b) du miroir (8) au capteur d'image (2).

2. Appareil photographique selon la revendication 1, **caractérisé en ce que** le capteur d'image (2) et la source de lumière (7) sont disposés sur des côtés différents du miroir semi-transparent (8).

3. Appareil photographique selon la revendication 1 ou 2, **caractérisé en ce que** l'objectif (3), la source de lumière (7), le miroir semi-transparent (8) et le capteur d'image (2) sont disposés en ligne droite les uns derrière les autres.

4. Appareil photographique selon l'une des revendications précédentes, **caractérisé en ce que** l'ajustage ou le réglage peut être réalisé en observant, à l'oeil, l' image de la au moins une source de lumière (7) projetée à travers l'objectif (3) dans le plan d'objet (5).

5. Appareil photographique (1) selon l'une des revendications 1 à 4, **caractérisé en ce que** la au moins une source de lumière (7) présente une petite surface lumineuse.

6. Appareil photographique (1) selon l'une des revendications 1 à 4, **caractérisé en ce que** la au moins une source de lumière (7) est conçue de manière à émettre sous forme de lignes.

7. Appareil photographique (1) selon l'une des revendications précédentes, **caractérisé en ce que** la au moins une source de lumière (7) est une diode électroluminescente.

8. Appareil photographique (1) selon l'une des revendications précédentes, **caractérisé en ce que** la au moins une source de lumière (7) ne présente aucun élément optique, par exemple aucune lentille.

9. Appareil photographique (1) selon l'une des revendications précédentes, **caractérisé en ce qu'**il comporte au moins trois sources de lumière (7).

10. Appareil photographique (1) selon la revendication 9, **caractérisé en ce que** les sources de lumière (7) sont disposées dans un plan parallèle à la surface photosensible du capteur d'image (2).

11. Appareil photographique (1) selon l'une des revendications précédentes, **caractérisé en ce que** la au moins une source de lumière (7) est disposée par rapport au capteur d'image (2) de telle façon que son image est projetée par le miroir semi-transparent (8) et l'objectif (3) sur un point de l'objet (4) qui se situe dans la zone du bord du champ de vision (13) du capteur d'image (2).

12. Appareil photographique (1) selon la revendication 11, **caractérisé en ce qu'**il comprend plusieurs sources de lumière (7), qui sont disposées de telle façon que leurs images se situent dans le plan d'objet (5), le long du contour de l'objet (4) à reproduire.

13. Appareil photographique (1) selon la revendication 12, **caractérisé en ce qu'**il comprend quatre sources de lumière (7), dont les images se situent dans le plan d'objet (5), aux sommets d'un champ de vision (13) rectangulaire du capteur d'image (2).

14. Appareil photographique (1) selon l'une des revendications précédentes, **caractérisé en ce que** la au moins une source de lumière (11) est disposée pour émettre en direction du point d'intersection (11) de l'axe optique (6) de l'appareil photographique (1) et du capteur d'image (2).

15. Appareil photographique (1) selon l'une des revendications précédentes, **caractérisé en ce que** la au moins une source de lumière (7) est disposée sur un support (9) qui présente une ouverture (10) pour la trajectoire de faisceau optique, la au moins une source de lumière (7) étant montée dans la zone de l'arête de l'ouverture (10).

16. Appareil photographique (1) selon l'une des revendications précédentes, **caractérisé en ce que** l'objectif (3) est un objectif zoom.

17. Procédé pour ajuster l'éloignement d'un appareil photographique (1) par rapport à un objet (4) ou pour régler l'objectif (3) de l'appareil photographique (1), l'appareil photographique (1) présentant un capteur d'image (2) pour enregistrer une image et un objectif (3) pour reproduire un objet (4) sur le capteur d'image (2),
l'appareil photographique (1) étant équipé d'un miroir semi-transparent (8) qui est disposé entre l'objectif (3) et le capteur d'image (2),
et au moins une source de lumière (7) étant prévue,
**caractérisé en ce que**
le miroir semi-transparent (8) est orienté parallèlement à la surface photosensible du capteur d'image (2),
la au moins une source de lumière (7) est disposée entre l'objectif (3) et le miroir semi-transparent (8) et émet de la lumière en direction du miroir semi-transparent (8),
la distance (a) de la source de lumière (7) au miroir semi-transparent (8) étant égale à la distance (b) du miroir semi-transparent (8) au capteur d'image (2),
et l'ajustement de l'éloignement de l'appareil photographique (1) par rapport à l'objet (4) ou le réglage de l'objectif (3) s'opérant à l'aide de la netteté de l'image de la au moins une source de lumière (7) dans le plan d'objet (5)

18. Procédé pour régler la position d'un appareil photographique (1) par rapport à un objet (4), l'appareil photographique (1) présentant un capteur d'image (2) pour enregistrer une image et un objectif (3) pour reproduire un objet (4) sur le capteur d'image (2),
l'appareil photographique (1) étant équipé d'un miroir semi-transparent (8) qui est disposé entre l'objectif (3) et le capteur d'image (2),
et au moins une source de lumière (7) étant prévue,
**caractérisé en ce que**
le miroir semi-transparent (8) est orienté parallèlement à la surface photosensible du capteur d'image (2),
la au moins une source de lumière (7) est disposée entre l'objectif (3) et le miroir semi-transparent (8) et émet de la lumière en direction du miroir semi-transparent (8),
la distance (a) de la source de lumière (7) au miroir semi-transparent (8) étant égale à la distance (b) du miroir semi-transparent (8) au capteur d'image (2),
et la au moins une source de lumière (7) étant disposée de telle façon par rapport au capteur d'image (2) que son image est projetée par le miroir semi-transparent (8) et l'objectif (3) sur un point de l'objet (4), qui se situe dans la zone du bord du champ de vision (13) du capteur d'image (2),
et la position de l'appareil photographique (1) par rapport à l'objet (4) étant réglée à l'aide de la position de l'image de la au moins une source de lumière (7) projetée sur l'objet (4).

19. Procédé selon la revendication 18, **caractérisé en ce que** plusieurs sources de lumière (7) sont utilisées, qui sont disposées de telle façon que leurs images se situent dans le plan d'objet (5) le long du contour de l'objet (4) à reproduire.

20. Procédé selon la revendication 19, **caractérisé en ce que** quatre sources de lumière (7) sont utilisées, dont les images se situent dans le plan d'objet (5) aux sommets d'un champ de vision (13) rectangulaire du capteur d'image (2).

21. Procédé selon l'une des revendications 17 à 20, **caractérisé en ce que** le capteur d'image (2) et la source de lumière (7) sont disposés sur des côtés différents du miroir transparent (8).

22. Procédé selon l'une des revendications 17 à 21, **caractérisé en ce que** l'objectif (3), la source de lumière (7), le miroir semi-transparent (8) et le capteur d'image (2) sont disposés en ligne droite les uns derrière les autres.

23. Procédé selon l'une des revendications 17 à 22, **caractérisé en ce que** l'ajustement est réalisé en observant, à l'oeil, l'image de la au moins une source de lumière (7) projetée à travers l'objectif (3) dans le plan d'objet (5).
